# FASCICULE DE BREVET EUROPEEN

(11) **EP 0 917 345 B1**
(45) Date de publication et mention de la délivrance du brevet: **23.11.2005**
(21) Numéro de dépôt: 98402707.8
(22) Date de dépôt: 30.10.1998
(51) Int. Cl.: H04N 1/32

(54) **Procédé d'identification d'un document de télécopie et terminal pour la mise en oeuvre du procédé**
Verfahren und Terminal zur Identifizierung eines Faxdokuments
Identification process of a facsimile document and terminal therefor

(30) Priorité: 12.11.1997 FR 9714144
(43) Date de publication de la demande: 19.05.1999
(73) Titulaire: Sagem SA, 75116 Paris (FR)
(72) Inventeur: Cazin, Dominique, 92150 Suresnes (FR)
(74) Mandataire: Bloch, Gérard

(56) Documents cités:
- EP-A- 0 465 011
- WO-A-96/41463
- LEVY G J: "CERTIFIED CUSTOMER RECEIPTS FOR FAC TRANSMISSIONS" XEROX DISCLOSURE JOURNAL, vol. 20, no. 6, 1 novembre 1995, page 539 XP000555759
- GRONERT EL: "FAX SERVERS GETA FIX ON INCOMING MESSAGES" DATA COMMUNICATIONS, vol. 23, no. 10, 1 juillet 1994, pages 55-56C, XP000457360

## Description

L'invention concerne la transmission d'un document de télécopie entre deux terminaux distants, à travers un réseau informatique de messagerie électronique tel que le réseau de l'Internet par exemple.

Par réseau informatique de messagerie électronique, on entend désigner tout réseau reliant entre eux une pluralité de terminaux et destiné à transporter des "messages électroniques" ou "courriers électroniques" entre au moins deux terminaux distants.

Les messages électroniques transmis sur l'Internet entre deux terminaux distants, pour reprendre cet exemple, comprennent un en-tête et, en pièce jointe, un fichier de données.

L'en-tête du message contient différents champs d'informations que l'on doit remplir afin de préparer le message. Ces champs comprennent généralement:
- un champ "Expéditeur" dans lequel on indique le nom et l'adresse Internet du terminal d'émission du message,
- un champ "Envoyer à" dans lequel on indique l'adresse Internet du terminal de destination du message,
- un champ "Objet" dans lequel on indique l'objet du message,
- un champ "Texte" dans lequel on indique un texte de message et
- un champ "Pièce jointe" dans lequel on indique une pièce jointe au message, le cas échéant.

La pièce jointe, codée dans un format de transport, est, de façon schématique, enfermée dans une enveloppe transportable sur le réseau de l'Internet.

La messagerie sur l'Internet peut être utilisée pour transmettre entre deux terminaux distants un document de télécopie, en pièce jointe d'un message. L'identité du terminal ayant émis la télécopie n'est indiquée que dans l'en-tête du message. Or, on pourrait souhaiter conserver l'identité du correspondant sur le document de télécopie reçu.

L'invention propose d'abord d'identifier le correspondant à la seule lecture du document de télécopie.

A cet effet, l'invention concerne un procédé d'identification d'un document de télécopie contenu dans un message transmis depuis un terminal d'émission vers un terminal de réception, à travers un réseau informatique de messagerie électronique, procédé au cours duquel, côté terminal de réception, on reçoit le message contenant le document de télécopie et l'identité du tenninal d'émission fournie par le réseau, on crée une zone d'impression d'identification du correspondant dans laquelle on copie l'identité du terminal d'émission et on insère ladite zone dans le document de télécopie.

En téléphonie, il est connu d'insérer, dans le document de télécopie reçu par un télécopieur, une zone d'identification du correspondant contenant l'identité du terminal d'émission fournie par le télécopieur d'émission, au cours d'un protocole d'échange entre les deux télécopieurs. Dans l'invention, l'identité du correspondant n'est pas fournie par le correspondant lui-même, mais par le réseau, ce qui permet de faire échouer toute tentative de fraude de la part du télécopieur d'émission. En effet, dans le cas où le terminal d'émission déclare une fausse identité dans le message qu'il émet, le terminal de réception récupère sa véritable identité fournie par le réseau.

Avantageusement, le document de télécopie étant codé en pixels, on code la zone d'identification du correspondant en pixels avant de l'insérer dans le document de télécopie.

L'invention concerne encore un terminal de réception pour la mise en oeuvre du procédé ci-dessus, agencé pour être relié à un réseau informatique de messagerie électronique, comprenant des moyens pour recevoir un message contenant un document de télécopie, caractérisé par le fait qu'il comprend des moyens pour saisir l'identité du terminal d'émission fournie par le réseau, des moyens pour créer une zone d'impression d'identification du correspondant contenant l'identité du terminal d'émission et des moyens pour insérer ladite zone dans le document de télécopie reçu.

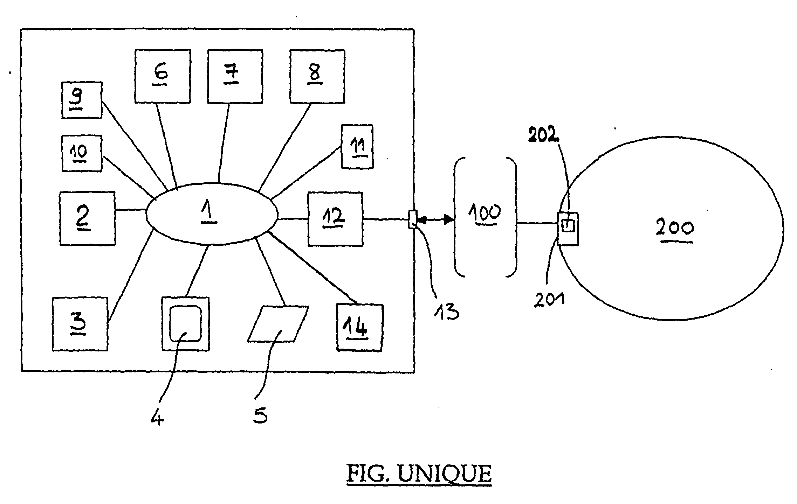

L'invention sera mieux comprise à l'aide de la description suivante d'un mode de réalisation préféré du procédé de l'invention et d'une forme de réalisation préférée du terminal de l'invention en référence à la figure annexée qui représente un schéma bloc fonctionnel du terminal de l'invention.

Le terminal représenté est un télécopieur.

Le télécopieur comprend, de façon classique, un bloc d'impression 2, un bloc d'analyse d'image 3, un bloc d'émission et de réception 12, une mémoire de télécopie 9, une horloge horodatrice 11 fournissant la date et l'heure, un clavier de saisie 5 et un écran d'affichage 4, tous ces éléments étant reliés à un bloc de contrôle 1, en l'espèce un microprocesseur.

Une prise 13 de connexion à un réseau de communication 100, en l'espèce le Réseau Téléphonique Commuté (RTC), est relié au bloc de réception et d'émission 12.

On pourrait envisager une connexion au réseau RNIS (Réseau Numérique à Intégration de Services), à la place de la connexion au réseau RTC.

Le télécopieur dispose en outre d'une boîte à courriers électroniques 202, avec une adresse électronique, auprès d'un fournisseur 201 d'accès à un réseau de messagerie électronique, en l'espèce le réseau de l'Internet 200.

Le télécopieur comprend un bloc de messagerie électronique 6, relié au bloc de contrôle 1, comportant un gestionnaire de courrier électronique permettant d'envoyer des courriers électroniques vers un destinataire, à travers l'Internet, et d'en recevoir.

Les courriers électroniques comprennent un en-tête contenant une pluralité de champs d'informations, et ici une pièce jointe constituée par un fichier de données correspondant à un document de télécopie.

Chaque champ d'informations de l'en-tête comprend une zone de texte qu'il convient de remplir afin de préparer chaque message à émettre. L'en-tête comprend ici:
- un champ "Expéditeur" dans lequel on indique le nom et l'adresse Internet du télécopieur,
- un champ "Envoyer à" dans lequel on indique l'adresse Internet du destinataire du message,
- un champ "Objet" dans lequel on indique l'objet du message,
- un champ "Pièce jointe", dans lequel on indique le document de télécopie joint au message et
- un champ "Texte", dans lequel on peut éventuellement indiquer un texte de message.

Enfin, le télécopieur comprend un bloc d'interface-utilisateur 14 pour configurer une fonction d'identification du correspondant, une mémoire d'identification 10 contenant l'identité du télécopieur, ici son nom et son adresse Internet, un bloc 7 de création de lignes d'impression d'identification du correspondant et un bloc 8 pour insérer ces lignes d'identification dans les documents de télécopie à émettre et dans les documents de télécopie reçus, tous ces éléments étant reliés au bloc de contrôle 1.

Le bloc d'interface-utilisateur 14 est destiné à afficher à l'écran une interface-utilisateur graphique, sous la commande d'une touche spécifique du clavier 5. L'interface-utilisateur permet à un utilisateur de paramétrer la fonction d'identification du correspondant du télécopieur. L'utilisateur peut ainsi enregistrer l'identité du télécopieur dans la mémoire d'identification 10, choisir d'insérer des lignes d'impression d'identification du correspondant en réception et/ou en émission, etc...

La réception par le télécopieur décrit ci-dessus d'un document de télécopie, comprenant ici une pluralité de pages, en pièce jointe d'un message électronique, et l'identification du document de télécopie reçu vont d'abord être décrites.

Le message est transmis depuis un télécopieur d'émission à travers le réseau de l'Internet 200, vers l'adresse Internet du télécopieur de réception.

Côté télécopieur de réception, on reçoit le message électronique contenant en pièce jointe le document de télécopie, dans la boîte à courriers électroniques 202 de l'Internet 200. A l'aide du gestionnaire de messagerie 6, on se connecte au fournisseur d'accès 201, on récupère le message dans la boîte à courriers électroniques 202 et on l'enregistre dans la mémoire de télécopie 9 du télécopieur.

Le message comprend un en-tête contenant notamment un champ "Expéditeur" dans lequel est indiquée l'identité du télécopieur ayant émis le message que l'on saisit à l'aide du bloc 7 de création de lignes d'identification. L'identité, comprenant le nom et l'adresse Internet du télécopieur d'émission, est fournie par le réseau de l'Internet 200. Ainsi, quelle que soit l'identité déclarée par le télécopieur d'émission de la télécopie, on saisit côté télécopieur de réception, l'identité sous laquelle le télécopieur d'émission est connu par le réseau de l'Internet 200.

On crée ensuite une ligne d'impression d'identification du correspondant (7) dans laquelle on copie le nom et l'adresse du télécopieur d'émission et la date et l'heure de réception fournies par l'horloge 11, à la réception du message de télécopie.

Le document de télécopie étant codé en pixels, on code la ligne d'impression d'identification du correspondant en pixels et on l'insère (8) dans le document de télécopie, en haut de chaque page du document.

Puis, à l'aide du bloc d'impression 2, on imprime sur papier le document de télécopie avec ici en haut de chaque page de papier la ligne d'impression d'identification du correspondant dans laquelle sont inscrits le nom et l'adresse du télécopieur d'émission et la date et l'heure de réception du document de télécopie.

On pourrait envisager de n'insérer qu'une seule ligne d'impression d'identification du correspondant en haut de la première page du document à imprimer.

L'émission par le télécopieur précédemment décrit d'un message électronique, contenant en pièce jointe un document de télécopie, et l'identification du document de télécopie à émettre vont maintenant être décrites.

En émission, afin de préparer un message de télécopie contenant, en pièce jointe, un document de télécopie, on remplit les champs de l'en-tête du message, à l'aide du clavier 5, de l'écran 4 et du gestionnaire de courriers électroniques 6.

On analyse et on numérise le document de télécopie à l'aide du bloc d'analyse d'image 3, le document numérisé étant codé en pixels.

On crée une ligne d'impression d'identification du correspondant (7) dans laquelle on copie le nom et l'adresse Internet du télécopieur d'émission préenregistrés dans la mémoire d'identification 10, ainsi que la date et l'heure d'émission du message fournies par l'horloge 11. On code la ligne d'impression d'identification du correspondant en pixels, on l'insère (8) dans le document de télécopie, en haut de chaque page du document et on joint le document de télécopie au message.

Enfin, on émet le message vers un télécopieur de réception dont l'adresse sur l'Internet est indiquée dans le champ "Envoyer à" de l'en-tête, à l'aide du bloc d'émission et de réception 12.

Côté télécopieur de réception, si on imprime le document de télécopie tel que reçu, la ligne d'impression d'identification du correspondant, insérée par le télécopieur d'émission, est imprimée en haut de chaque page du document de télécopie.

Le télécopieur de réception pourrait, comme le télécopieur précédemment décrit, comprendre un bloc de création de lignes d'impression d'identification du correspondant agencé pour insérer une ligne d'impression d'identification du correspondant en réception de télécopie. Dans ce cas, le document de télécopie comprendrait la ligne d'impression d'identification du correspondant insérée par le télécopieur d'émission et celle insérée par le télécopieur de réception.

## Revendications

1. Procédé d'identification d'un document de télécopie contenu dans un message transmis depuis un terminal d'émission vers un terminal de réception, à travers un réseau informatique de messagerie électronique (200), procédé au cours duquel, côté terminal de réception, on reçoit le message contenant le document de télécopie et l'identité du terminal d'émission fournie par le réseau, on crée (7) une zone d'impression d'identification du correspondant dans laquelle on copie l'identité du terminal d'émission et on insère (8) ladite zone dans le document de télécopie.

2. Procédé selon la revendication 1, dans lequel, le document de télécopie étant codé en pixels, on code la zone d'impression d'identification du correspondant en pixels avant de l'insérer dans le document de télécopie.

3. Procédé selon l'une des revendications 1 et 2, dans lequel on ajoute dans la zone d'impression d'identification du correspondant la date et l'heure de réception du message.

4. Terminal de réception pour la mise en oeuvre du procédé de la revendication 1, agencé pour être relié à un réseau informatique de messagerie électronique (200), comprenant des moyens (12) pour recevoir un message contenant un document de télécopie, **caractérisé par le fait qu'**il comprend des moyens (7) pour saisir l'identité du terminal d'émission fournie par le réseau (200), des moyens (7) pour créer une zone d'impression d'identification du correspondant contenant l'identité du terminal d'émission et des moyens (8) pour insérer ladite zone dans le document de télécopie reçu.

5. Terminal de réception selon la revendication 4, dans lequel, le document de télécopie étant codé en pixels, les moyens (7) pour créer la zone d'impression d'identification du correspondant sont agencés pour la coder en pixels.

6. Terminal de réception selon l'une des revendications 4 et 5, dans lequel le terminal comprenant une horloge horodatrice (11), les moyens (7) pour créer la zone d'impression d'identification du correspondant sont agencés pour, à la réception du document de télécopie, copier le contenu de l'horloge (11) dans la zone d'impression d'identification de la télécopie.

## Patentansprüche

1. Verfahren zur Identifizierung eines Faxdokuments, das in einer Nachricht enthalten ist, die von einem Sendegerät zu einem Empfangsgerät über ein Computernetz zur elektronischen Übertragung (200) übertragen wird, wobei in dessen Verlauf empfangsgeräteseitig die Nachricht eingeht, die das Faxdokument und die vom Netz bereitgestellte Kennung des Geräts enthält, ein Druckbereich für die Identifizierung des Teilnehmers geschaffen wird (7), in den die Kennung des Sendegeräts kopiert wird, und dieser Bereich in das Faxdokument eingefügt wird (8).

2. Verfahren nach Anspruch 1,
wobei, nachdem das Faxdokument in Pixeln codiert wurde, der Druckbereich für die Identifizierung des Teilnehmers in Pixeln codiert wird, bevor er in das Faxdokument eingefügt wird.

3. Verfahren nach Anspruch 1 oder 2,
wobei in den Druckbereich zur Identifizierung des Teilnehmers Datum und Uhrzeit des Empfangs der Nachricht hinzugefügt werden.

4. Empfangsgerät zur Durchführung des Verfahrens nach Anspruch 1, das eingerichtet ist um mit einem Computernetz für elektronische Übertragung (200) verbunden zu werden, und das Einrichtungen (12) umfaßt, um eine Nachricht zu empfangen, die ein Faxdokument enthält,
**dadurch gekennzeichnet, dass**
es folgendes umfasst:
Einrichtungen (7), um die vom Netz (200) bereitgestellte Kennung des Sendegeräts zu erfassen,
Einrichtungen (7), um einen die Kennung des Sendegeräts enthaltenden Druckbereich zur Identifizierung des Teilnehmers zu schaffen, und
Einrichtungen (8), um diesen Bereich in das eingegangene Faxdokument einzufügen.

5. Empfangsgerät nach Anspruch 4,
wobei, nachdem das Faxdokument in Pixeln codiert wurde, die Einrichtungen (7) zur Schaffung des Druckbereichs für die Identifizierung des Teilnehmers dazu eingerichtet sind, den Bereich in Pixeln zu codieren.

6. Empfangsgerät nach einem der Ansprüche 4 und 5,
wobei das Gerät einen Stunden-/Datumszeitgeber (11) umfasst, wobei die Einrichtungen (7) zur Schaffung der Druckzone zur Identifizierung des Teilnehmers dazu eingerichtet sind, beim Empfang des Faxdokuments den Inhalt des Zeitgebers (11) in die Druckzone zur Identifizierung des Faxes zu kopieren.

## Claims

1. Process for identification of a fax document contained in a message transmitted from a sending terminal to a receiving terminal, through a computer network for electronic messaging (200), a process during which, on the side of the receiving terminal, the message containing the fax document and the identity of the sending terminal provided by the network is received, a print area identifying the caller is created into which the identity of the sending terminal is copied and said print area is inserted (8) into the fax document.

2. Process according to claim 1, wherein, the fax document being coded in pixels, the print area identifying the caller is coded in pixels before being inserted into the fax document.

3. Process according to one of claims 1 and 2, wherein the date and the time of receipt of the message are added in the print area identifying the caller.

4. Receiving terminal for implementing the process of claim 1, arranged to be connected to a computer network for electronic messaging (200) and comprising means (12) for receiving a message containing a fax document, **characterised in that** it includes means (7) for capturing the identity of the sending terminal provided by the network (200), means (7) for creating a print area identifying the caller and containing the identity of the sending terminal, and means (8) for inserting said print area into the received fax document.

5. Receiving terminal according to claim 4, wherein, the fax document being coded in pixels, the means (7) for creating the print area identifying the caller are arranged to code it in pixels.

6. Receiving terminal according to one of claims 4 and 5, wherein the terminal including a date-time stamping clock (11), the means (7) for creating the print area identifying the caller are arranged to copy the contents of the clock (11) into the fax identification print area, on receipt of the fax document.
